# EUROPÄISCHE PATENTSCHRIFT

(11) **EP 1 980 127 B1**
(45) Veröffentlichungstag und Bekanntmachung des Hinweises auf die Patenterteilung: **14.03.2012**
(21) Anmeldenummer: 07703144.1
(22) Anmeldetag: 30.01.2007
(51) Int. Cl.: H04W 4/02

(54) **Kommunikationssystem mit ortsabhaengigen besonderen Dienstleistungen fuer die Benutzung eines Computers**
Communication system with location dependent special services for computer usage
Système de communications avec services speciaux dependants de la localisation pour l'utilisation d'un ordinateur

(30) Priorität: 31.01.2006 DE 102006004453
(43) Veröffentlichungstag der Anmeldung: 15.10.2008
(73) Patentinhaber: Telefónica Germany GmbH & Co. OHG, 80992 München (DE)
(72) Erfinder: MACARRO, Agustin, 80469 München (DE)
(74) Vertreter: Herrmann, Uwe
(86) Internationale Anmeldenummer: PCT/EP2007/000790
(87) Internationale Veröffentlichungsnummer: WO 2007/088025

(56) Entgegenhaltungen:
- WO-A-00/16579
- DE-A1- 19 911 938
- BÖGEHOLZ, H., ZIVADINOVIC, D.: "Telefon-Zellen Die Technik des Mobilfunknetzes von Viag Interkom" C'T, [Online] Nr. 18, 1999, Seiten 1-6, XP007902622 Gefunden im Internet: URL:http://www.heise.de/ct/99/18/174/> [gefunden am 2007-07-11]
- "O2 Connection Manager, Using the O2GPRS, 3G and Wireless LAN Services" INTERNET CITATION, [Online] Oktober 2005 (2005-10), XP007902630 Gefunden im Internet: URL:http://web.o2.ie/pdf/Connection_manage r_adv_user_guide.pdf> [gefunden am 2007-07-11]

## Beschreibung

Die Erfindung betrifft ein Kommunikationssystem mit einem Personal computer mit einem Bildschirm oder mit einem Laptop mit einem Bildschirm, mit einer mit dem Computer in Verbindung stehenden Kommunikationseinheit, mittels derer eine drahtlose Verbindung mit einem Mobilfunknetz aufbaubar ist, sowie mit einem Kenndatenmodul.

Es ist bekannt, Mobilfunknetze nicht nur für die Kommunikation mit herkömmlichen Handys, PDAs und dergleichen, sondern auch für die Kommunikation mittels eines Personalcomputers, insbesondere mittels eines Laptops zu nutzen. Die Nutzung derartiger Computer in Mobilfunknetzen erfolgt dabei beispielsweise dadurch, dass in diese eine Kommunikationseinheit mit einer SIM-Karte eingeschoben wird, die nach entsprechender Aktivierung die Kommunikation mit dem Mobilfunknetz aufbaut, so dass beispielsweise eine Internetnutzung mittels des Computers möglich ist.

Aus Bögeholz, H., Zivadinovic, D.:"Telefon-Zellen, Die Technik des Mobilfunknetzes von Viag Interkom", c't, [Online] Nr. 18, 1999, Seiten 1 - 6 XP007902622 gefunden im Internet: URL:http://www.heise.de/ct/99/18/174/ [gefunden am 2007-07-11] ist bekannt, die Vergebührung bei Mobilfunksystemen derart durchzuführen, dass dem Nutzer eine spezielle Abrechnungszone, beispielsweise eine Home-Zone und/oder City-Zone eingerichtet wird. In diesen Abrechnungszonen können dem Kunden günstigere Konditionen eingeräumt werden. Eine Positionsbestimmung des Mobiltelefons erfolgt durch einen Abgleich der tatsächlichen Ortsdaten mit den auf der SIM-Karte hinterlegten Daten betreffend die Abrechnungszone.

Die DE 199 11 938 A1 betrifft ein Kommunikationssystem für den Mobilfunk und ein geeignetes Verfahren hierfür. Dabei wird innerhalb eines Gesamtgebietes eines Kommunikationssystems für den Mobilfunk ein Teilgebiet zugeordnet, wobei die Parameter der zugeordneten Teilgebiete in einem Teilnehmerkenndatenmodul (SIM) abgespeichert werden, so dass die Berechtigungsüberprüfung von einer mobilen Nutzereinheit, wie z. B. einem Mobiltelefon, selbst erfolgen kann.

Die WO 00/16579 A1 betrifft ein Vergebührungssystem für den Mobilfunk, wobei anhand eines Abgleichs, ob sich das Mobiltelefon in einer besonderen Mobilfunkzelle befindet, eine Vergebührung durchgeführt wird.

"Aus der Druckschrift "O2 Connection Manager, using the O2 GPRS and Wireless Lan Services", URL: http://web.02.ie/pdf/Connection_manager_adv_user_guide.pdf ist ein Personalcomputer bekannt, der eine Kommunikationseinheit aufweist, mittels derer drahtlos Daten von einem Mobilfunknetz empfangbar und/oder drahtlos Daten an ein Mobilfunknetz übermittelbar sind.

Der vorliegenden Erfindung liegt die Aufgabe zugrunde, ein Kommunikationssystem der eingangs genannten Art dahingehend weiterzubilden, dass dessen Nutzung attraktiver gestaltet werden kann.

Diese Aufgabe wird durch ein Kommunikationssystem mit den Merkmalen des Patentanspruchs 1 gelöst. Danach ist vorgesehen, dass das Kommunikationssystem einen Speicher aufweist, in dem Daten abgelegt sind, die ein oder mehrere Teilnehmergebiete definieren, die einen Teil eines von dem Mobilfunknetz abgedeckten Gesamtgebietes bilden. Das erfindungsgemäße Kommunikationssystem umfaßt des Weiteren eine Vergleichseinheit, die derart ausgeführt ist, dass sie mittels der Kommunikationseinheit empfangene Daten des aktuellen Aufenthaltsortes der Kommunikationseinheit mit den das oder die Teilnehmergebiete betreffenden Daten vergleicht, die in dem Speicher abgelegt sind.

Die Vergleichseinheit prüft somit, ob sich die Kommunikationseinheit, die mit dem Computer in Verbindung steht oder verbindbar ist, innerhalb eines Teilnehmergebietes befindet. Das oder die Teilnehmergebiete bilden einen Teilbereich eines von einem Mobilfunknetz abgedeckten Gesamtgebietes und dienen beispielsweise dazu, dem Nutzer des Computers bzw. des Kommunikationssystems, der sich innerhalb eines Teilnehmergebietes aufhält, einen besonderen Service zur Verfügung zu stellen. Das Kommunikationssystem weist einen Speicher auf, in dem Daten abgelegt sind, die das oder die Teilnehmergebiete definieren. Ein Vergleich wird zwischen diesen Daten und den drahtlos empfangenen Daten gezogen, die den Aufenthaltsort der Kommunikationseinheit kennzeichnen.

Der Computer des erfindungsgemäßen Kommunikationssystems dient zur mobilen internetnutzung. Das erfindungsgemäße Kommunikationssystem ermöglicht somit die Einrichtung teilnehmerindividuellen Teilnehmergebieten für die Datenkommunikation.

In bevorzugter Ausgestaltung der Erfindung ist vorgesehen, dass die Kommunikationsmittel, mittels derer Daten vom/zum Computer (beispielsweise zum/aus dem Internet) übertragen werden, der Kommunikationseinheit entsprechen oder einen Teil von dieser bilden, die die Daten zum aktuellen Aufenthaltsort empfängt. Selbstverständlich ist es ebenfalls möglich, zwei verschiedene Einheiten vorzusehen.

Bei den gespeicherten Daten kann es sich beispielsweise um Daten handeln, die eine sogenannte Homezone und/oder einer Cityzone des Mobilfunknetzes kennzeichnen.

Die das oder die Teilnehmergebiete definierenden Daten können beispielsweise einen Ort sowie einen Radius eines Teilnehmergebietes darstellen oder Kennungen von Funkzellen, insbesondere in Form von LAC/Cl, umfassen.

Das oder die Teilnehmergebiete sind teilnehmerindividuell definiert.

Das Ergebnis des Vergleiches wird dazu herangezogen um dem Nutzer des Computers anzeigen zu können ob er sich innerhalb oder außerhalb eines Teilnehmergebietes befindet. Dementsprechend sind Anzeigemittel in Form des Bildschirms vorgesehen, die mit der Vergleichseinheit derart in Verbindung stehen, dass das Ergebnis des in der Vergleichseinheit vorgenommenen Vergleichs an die Anzeigemittel übertragbar ist, wobei die Anzeigemittel derart ausgeführt sind, dass das Ergebnis des Vergleiches auf dem Computer wiedergebbar ist.

Gemäß dem erfindungsgemäßen Kommunikationssystem kann somit vorgesehen sein, dass für den Nutzer auf dem Computer eine Anzeige generierbar ist, die auf dem mittels der Vergleichseinheit vorgenommenen Vergleich zwischen dem aktuellen Aufenthaltsort der Kommunikationseinheit und dem Teilnehmergebiet des Nutzers basiert. Ergibt sich aus diesem Vergleich beispielsweise, dass sich der aktuelle Aufenthaltsort der Kommunikationseinheit in einem Teilnehmergebiet des Nutzers befindet, wird dies mittels der Vergleichseinheit festgestellt und das Ergebnis beispielsweise in optischer Form als Icon auf dem Bildschirm des Computers wiedergegeben.

Ändert der Nutzer seinen Aufenthaltsort derart, dass er nach dem Aufbau der Verbindung mit dem Mobilfunknetz ein Teilnehmergebiet verläßt oder in ein Teilnehmergebiet eintritt, kann vorgesehen sein, dass sich die genannte Anzeige nicht ändert, sondern sich nach wie vor danach richtet, an welchem Ort die Verbindung aufgebaut wurde. Ebenfalls ist denkbar, dass stets eine Aktualisierung der Anzeige dahingehend erfolgt, dass stets der aktuelle Aufenthaltsort der Generierung einer Anzeige zugrundegelegt wird.

In weiterer Ausgestaltung der Erfindung ist ein Kenndatenmodul vorgesehen, dass den genannten Speicher aufweist, in dem die Daten abgelegt sind, die ein oder mehrere Teilnehmergebiete eines Mobilfunknetzes definieren.

Besonders vorteilhaft ist es, wenn das Kenndatenmodul Bestandteil der Kommunikationseinheit ist oder in diese einsetzbar ist. Bei dem Kenndatenmodul kann es sich beispielsweise um eine SIM-Karte bzw. um eine UICC-Karte handeln.

Die Kommunikationseinheit kann derart aufgebaut sein, dass sie mit jedem herkömmlichen Mobilfunknetz, das heißt beispielsweise mit einem nach dem GSM oder UMTS-Standard arbeitenden Mobilfunknetz kommunizieren kann. Selbstverständlich sind auch zukünftige Mobilfunkstandards erfaßt.

Bei der Kommunikationseinheit kann es sich beispielsweise um ein herkömmliches Handy oder ein/eine mit dem Computer in Verbindung stehende/s Modem bzw. PC-Karte handeln. Denkbar ist somit, dass mittels eines Handys, Modems oder mittels einer PC-Karte eine Kommunikation mit einem Mobilfunknetz aufgebaut wird, so dass über diesen Weg eine Information hinsichtlich des aktuellen Aufenthaltsorts eingeholt werden kann. Dieser "Istwert" kann sodann in der Vergleichseinheit mit einem Sollwert verglichen werden, der durch die Daten in dem Speicherbereich des Kenndatenmoduls gebildet wird. Neben der Verwendung eines herkömmlichen Handys, PDAs, etc. kann selbstverständlich auch ein Modem bzw. eine PC-Karte eingesetzt werden, die ebenfalls dazu in der Lage sind, drahtlos mit einem Mobilfunknetz zu kommunizieren.

Die Verbindung zwischen der Kommunikationseinheit und dem PC ist weitgehend beliebig. Denkbar ist beispielsweise dass eine Kabelverbindung oder eine drahtlose Verbindung gewählt wird. Im letzten Fall kann vorgesehen sein, dass die Kommunikationseinheit und der Computer beispielsweise per Bluetooth oder WLAN miteinander kommunizieren. Selbstverständlich sind auch andere Übertragungsarten bzw. -standards denkbar. Denkbar ist auch, dass die Kommunikationseinheit Bestandteil des Computers ist, beispielsweise in diesen integriert ist.

In bevorzugter Ausgestaltung der Erfindung ist die Vergleichseinheit in dem Computer angeordnet. Sie kann Bestandteil einer auf dem Computer gespeicherten Applikation sein.

In weiterer Ausgestaltung der Erfindung ist eine Triggereinheit vorgesehen, die einen Vergleich zwischen Daten des aktuellen Aufenthaltsortes der Kommunikationseinheit und Daten des Speichers mittels der Vergleichseinheit veranlaßt. Diese Triggereinheit kann derart ausgeführt sein, dass sie den Vergleich beispielsweise beim Start des Computers, bei Eintreten eines anderen Ereignisses oder auf Aufforderung durch den Nutzer des Computers veranlasst. Denkbar ist somit beispielsweise, dass nach dem Start des Computers die Triggereinheit die Vergleichseinheit aktiviert, so dass unmittelbar nach dem Start des Computers geprüft werden kann, ob sich die Kommunikationseinheit und somit auch der in der Nähe zu dieser befindliche Computer innerhalb oder außerhalb eines Teilnehmergebietes befindet. Denkbar ist auch, diesen Vergleich vom Start des Computers unabhängig zu gestalten und ihn vom Eintreten eines anderen Ereignisses abhängig zu machen. Denkbar ist auch, den Vergleich auf Aufforderung durch den Nutzer des Computers zu veranlassen.

Die Triggereinheit kann beispielsweise derart ausgeführt sein, dass sie den Vergleich beim Wechsel des Aufenthaltsortes der Kommunikationseinheit, insbesondere beim Wechsel einer Funkzelle eines Mobilfunknetzes, nicht veranlaßt. In diesem Fall bleibt es bei der Anzeige der Zugehörigkeit oder fehlenden Zugehörigkeit zu einem Teilnehmergebiet, selbst wenn dieser Status sich durch die Bewegung der Kommunikationseinheit bzw. des Computers ändern sollte.

In weiterer Ausgestaltung der Erfindung ist vorgesehen, dass die Triggereinheit derart ausgeführt ist, dass sie nach dem Start des Computers, bei Eintreten eines anderen Ereignisses oder auf Anforderung durch den Nutzer bei der Kommunikationseinheit Daten des aktuellen Aufenthaltsortes der Kommunikationseinheit abfragt oder von der Kommunikationseinheit über Daten des aktuellen Aufenthaltsortes informiert wird. Dabei kann vorgesehen sein, dass im Anschluss daran die Vergleichseinheit aktiviert wird, damit ein Vergleich zwischen dem tatsächlichen Aufenthaltsort und dem Teilnehmergebiet vorgenommen werden kann.

In weiterer Ausgestaltung der Erfindung ist vorgesehen, dass das Kommunikationssystem derart ausgeführt ist, dass die Wiedergabe des Ergebnisses des Vergleiches oder die Durchführung des Vergleiches und somit auch die Anzeige der Zugehörigkeit oder fehlenden Zugehörigkeit zu einem Teilnehmergebiet von dem Tarif des Nutzers abhängt. Dabei kann der Tarif des Nutzers in dem Speicher, beispielsweise auf dem Kenndatenmodul gespeichert sein. Denkbar ist beispielsweise, dass der Vergleich bzw. die den Vergleich umfassende Applikation nur dann gestartet wird bzw. eine Abfrage des aktuellen Aufenthaltsortes nur dann veranlasst oder durchgeführt wird, wenn für den entsprechenden Nutzer ein Tarif anwendbar ist, der eine derartige Applikation vorsieht.

In weiterer Ausgestaltung der Erfindung sind Mittel vorgesehen sind, die eine mittels der Anzeigemittel erzeugte Anzeige auf dem Computer wieder entfernen. Dabei können die Mittel derart ausgeführt sein, dass eine Entfernung der Anzeige bei einer Unterbrechung der Verbindung zwischen Computer und Kommunikationseinheit erfolgt. Denkbar ist auch, dass die Mittel derart ausgeführt sind, dass eine Entfernung der Anzeige nach Ablauf einer bestimmten Zeitspanne nach Erzeugung der Anzeige oder auf Aufforderung durch den Nutzer des Computers erfolgt.

Weitere Einzelheiten und Vorteile der Erfindung werden anhand eines Ausführungsbeispiels näher erläutert. Es zeigen:
- Figur 1:: einen schematischen Aufbau eines erfindungsgemäßen Kommunikationssystems und
- Figur 2:: eine schematische Darstellung der Provisionierung sowie der Erzeugung und Entfernung der Anzeige auf dem Computer.

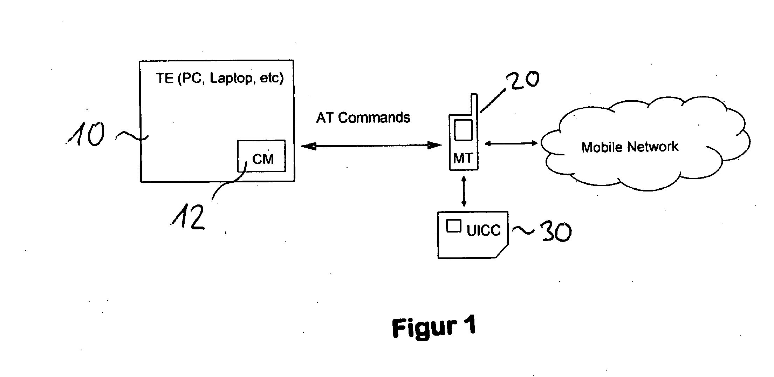

In Figur 1 ist mit dem Bezugszeichen 10 ein mobiler PC gekennzeichnet, auf dem eine Applikation 12 abgespeichert ist. Das Bezugszeichen 20 kennzeichnet ein herkömmliches Handy, in das die UICC-Karte 30 einsetzbar ist. Das Handy 20 steht in herkömmlicher Weise mit dem dargestellten Mobilfunknetz in Verbindung.

Auf der SIM-Karte 30 befindet sich ein Speicherbereich, in dem Daten eingeschrieben sind, die ein oder mehrere Teilnehmergebiete eines Nutzers des Kommunikationssystems kennzeichnen. Dabei kann es sich beispielsweise um eine Liste von Location-Area-Codes und/oder Cell-IDs handeln, die das Teilnehmergebiet definieren. Grundsätzlich ebenfalls ist denkbar, dass das Teilnehmergebiet durch einen Ortspunkt und einen Radius definiert wird.

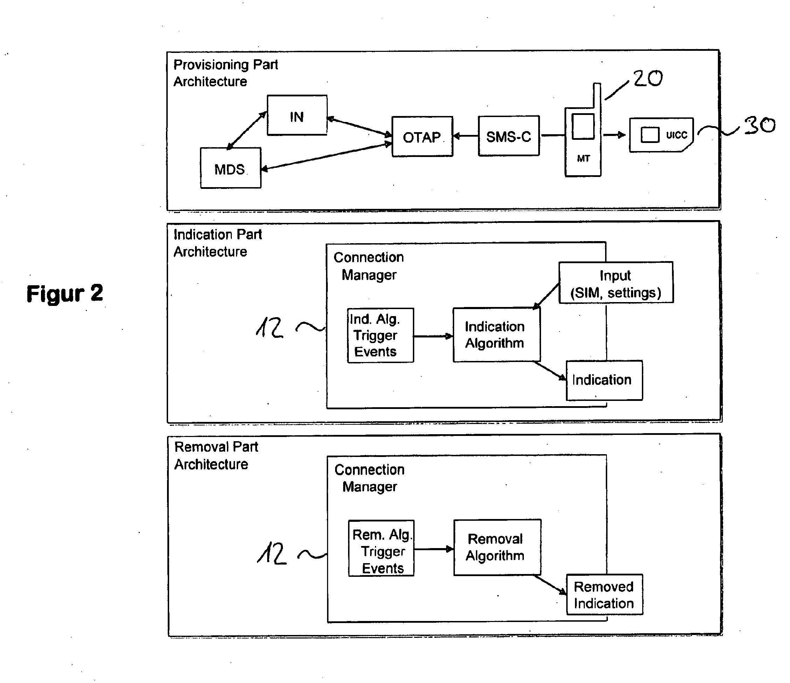

Figur 2, obere Darstellung zeigt, dass die Provisionierung, das heißt Einrichtung des oder der Teilnehmergebiete dadurch erfolgt, dass über eine "Luftschnittstelle" (OTAP) eine SMS an das Handy 20 gesendet wird, die Daten enthält, die das Teilnehmergebiet definieren. Diese Daten werden sodann in dem Speicherbereich der SIM-Karte 30 abgelegt.

Wie dies aus Figur 1 hervorgeht, steht die als Handy 20 ausgeführte Kommunikationseinheit und der Computer 10 drahtlos miteinander in Verbindung. Grundsätzlich ebenfalls ist denkbar, hier eine drahtgebundene Verbindung vorzusehen.

Die auf dem PC 10 laufende Applikation 12 umfasst eine Vergleichseinheit sowie eine Triggereinheit, wobei die Vergleichseinheit dazu dient, mittels des Handys 20 empfangene Daten des aktuellen Aufenthaltsortes des Handys 20 mit Daten des Speicherbereiches der SIM-Karte 30 zu vergleichen. Die Triggereinheit dient dazu, auf Aufforderung des Nutzers, in bestimmten Zeitabständen oder bei Eintreten bestimmter Ereignisse die auf dem Computer befindliche Applikation 12 zu starten. Denkbar ist beispielsweise, dass die Applikation gestartet wird, wenn der Computer 10 eingeschaltet wird oder wenn der Nutzer dies verlangt.

Nach dem Start der Applikation 12 erfolgt zunächst eine Abfrage der LAC/Cl-Liste durch die Applikation 12 bzw. den Computer 10 an die SIM-Karte 30, die ein oder mehrere Teilnehmergebiete des Nutzers definiert. Des weiteren folgt eine Abfrage der Applikation 12 bzw. des Computers 10 an die Kommunikationseinheit, das heißt an das Handy 20, welche Kennung des aktuellen Aufenthaltsortes vorliegt.

Liegen diese Daten vor, wird die Vergleichseinheit aktiviert, die prüft, ob die aktuelle Funkzelle innerhalb oder außerhalb eines Teilnehmergebietes liegt.

Das Ergebnis dieses Vergleiches ist an Anzeigemittel übertragbar, die derart ausgestaltet sind, dass sie das Ergebnis des Vergleiches auf dem Computer wiedergeben. Die Wiedergabe erfolgt gemäß diesem Ausführungsbeispiel durch ein optisch wahrnehmbares Symbol oder einen Text. Wird mittels der Vergleichseinheit festgestellt, dass der aktuelle Aufenthaltsort innerhalb eines Teilnehmergebietes liegt, wird dies entsprechend angezeigt. Ist dies nicht der Fall, unterbleibt eine Anzeige oder es wird eine andere Anzeige generiert.

In bevorzugter Ausgestaltung der Erfindung wird ein derartiger Vergleich nicht wiederholt, wenn sich die aktuelle Funkzelle der Kommunikationseinheit bzw. des Handys 20 ändert. Wird der Computer 10 mit Kommunikationseinheit bzw. Handy 20 in eine andere Funkzelle bewegt, ändert dies somit nichts an der bestehenden Anzeige auf dem Computerbildschirm.

Die Möglichkeit der Anzeige der Zugehörigkeit zu einem Teilnehmergebiet kann davon abhängig gemacht werden, dass der Kunde einen Tarif gewählt hat, der diese Anzeige bzw. Applikation vorsieht. Somit ist es möglich, dass die Applikation 12 eine weitere Abfrage durchführt, mittels derer feststellbar ist, ob ein derartiger Tarif gewählt wurde. Ist dies jedoch der Fall, kann vorgesehen sein, dass die Applikation bereits an dieser Stelle abgebrochen wird. Ist dies nicht der Fall, wird der Algorithmus der Applikation 12 weiter durchlaufen und bei einem positiven Vergleich eine entsprechende Anzeige generiert, wie dies aus Figur 2, mittlere Darstellung hervorgeht.

Das Kommunikationssystem bzw. Computer 10 weist des weiteren Mittel auf, die eine mittels der Anzeigemittel erzeugte Anzeige auf dem Computer wieder entfernen. Denkbar ist beispielsweise, dass auch hierzu ein spezieller Trigger erforderlich ist, der beispielsweise dann ausgelöst wird, wenn eine Unterbrechung der Verbindung zwischen Computer und Kommunikationseinheit erfolgt. Denkbar ist auch, dass die Entfernung der Anzeige nach Ablauf einer bestimmten Zeitspanne nach Erzeugung der Anzeige oder auch auf Aufforderung durch den Nutzer des Computers erfolgt. Die Entfernung der Anzeige ist Bestandteil von Figur 2, untere Darstellung.

Die vorliegende Erfindung ermöglicht es beispielsweise, dem Nutzer eines mobilen PCs mitzuteilen, ob er sich innerhalb oder außerhalb eines Teilnehmergebietes befindet. Dabei kann vorgesehen sein, dass in den vorzugsweise teilnehmerindividuell definierten Teilnehmergebieten besondere Dienstleistungen für den Nutzer bzw. für die Benutzung des Computers realisiert sind.

## Patentansprüche

1. Kommunikationssystem mit einem Personalcomputer (10) mit einem Bildschirm oder Laptop mit einem Bildschirm zur mobilen Internetnutzung, mit einer Kommunikationseinheit (20), die mit dem Personalcomputer (10) oder Laptop (10) in Verbindung steht und mittels derer drahtlos Daten von einem Mobilfunknetz empfangbar und/oder drahtlos Daten an ein Mobilfunknetz übermittelbar sind, mit einem Speicher, in dem Daten abgelegt sind, die ein oder mehrere Teilnehmergebiete definieren, die einen Teil eines von dem Mobilfunknetz abgedeckten Gesamtgebietes bilden, sowie mit einer Vergleichseinheit, die derart ausgeführt ist, dass sie mittels der Kommunikationseinheit (20) empfangene Daten des aktuellen Aufenthaltsortes der Kommunikationseinheit (20) mit den das oder die Teilnehmergebiete betreffenden Daten vergleicht, die in dem Speicher abgelegt sind, wobei Anzeigemittel in Form des Bildschirms vorgesehen sind, die mit der Vergleichseinheit derart in Verbindung stehen, dass das Ergebnis des in der Vergleichseinheit vorgenommenen Vergleichs an die Anzeigemittel übertragbar ist, wobei die Anzeigemittel derart ausgeführt sind, dass das Ergebnis des Vergleiches auf dem Personalcomputer (10) oder Laptop (10) wiedergebbar ist, wobei die Teilnehmergebiete teilnehmerindividuell definiert sind und
wobei in den teilnehmerindividuell definierten Teilnehmergebieten besondere Dienstleistungen für die Benutzung des Personalcomputers (10) oder Laptops (10) realisiert sind.

2. Kommunikationssystem nach Anspruch 1, **dadurch gekennzeichnet, dass** ein Kenndatenmodul vorgesehen ist und dass sich der Speicher auf dem Kenndatenmodul befindet, wobei es sich bei dem Kenndatenmodul um eine SIM-Karte (30), insbesondere um eine UICC-Karte handelt.

3. Kommunikationssystem nach Anspruch 2, **dadurch gekennzeichnet, dass** das Kenndatenmodul Bestandteil der Kommunikationseinheit (20) ist oder in diese einsetzbar ist.

4. Kommunikationssystem nach einem der vorhergehenden Ansprüche, **dadurch gekennzeichnet, dass** es sich bei der Kommunikationseinheit (20) um ein herkömmliches Handy oder ein/eine mit dem Personalcomputer (10) oder Laptop (10) in Verbindung stehende/s Modem bzw. PC-Karte handelt.

5. Kommunikationssystem nach einem der vorhergehenden Ansprüche, **dadurch gekennzeichnet, dass** die Kommunikationseinheit (20) und der Personalcomputer (10) oder Laptop (10) mittels einer Kabelverbindung, Steckverbindung oder drahtlos miteinander in Verbindung stehen.

6. Kommunikationssystem nach Anspruch 5 6, **dadurch gekennzeichnet, dass** die Verbindung zwischen der Kommunikationseinheit und dem Personalcomputer (10) oder Laptop (10) per Bluetooth oder WLAN realisiert ist.

7. Kommunikationssystem nach einem der vorhergehenden Ansprüche, **dadurch gekennzeichnet, dass** die Vergleichseinheit in dem Personalcomputer (10) oder Laptop (10) angeordnet ist.

8. Kommunikationssystem nach einem der vorhergehenden Ansprüche, **dadurch gekennzeichnet, dass** eine Triggereinheit vorgesehen ist, die einen Vergleich zwischen Daten des aktuellen Aufenthaltsortes der Kommunikationseinheit (20) und Daten des Speichers mittels der Vergleichseinheit veranlasst.

9. Kommunikationssystem nach Anspruch 8, **dadurch gekennzeichnet, dass** die Triggereinheit derart ausgeführt ist, dass sie den Vergleich beim Start des Personalcomputers (10) oder Laptops (10) oder auf Aufforderung durch den Nutzer des Personalcomputers (10) oder Laptops (10) veranlasst.

10. Kommunikationssystem nach Anspruch 8 oder 9, **dadurch gekennzeichnet, dass** die Triggereinheit derart ausgeführt ist, dass sie den Vergleich beim Wechsel des Aufenthaltsortes der Kommunikationseinheit (20), insbesondere beim Wechsel einer Funkzelle eines Mobilfunknetzes, nicht veranlasst.

11. Kommunikationssystem nach einem der Ansprüche 8 bis 10, **dadurch gekennzeichnet, dass** die Triggereinheit derart ausgeführt ist, dass sie nach dem Start des Personalcomputers (10) oder Laptops (10) oder auf Anforderung durch den Nutzer bei der Kommunikationseinheit (20) Daten des aktuellen Aufenthaltsortes der Kommunikationseinheit (20) abfragt oder von der Kommunikationseinheit (20) über Daten des aktuellen Aufenthaltsortes informiert wird.

12. Kommunikationssystem nach Anspruch 11, **dadurch gekennzeichnet, dass** die Triggereinheit derart ausgeführt ist, dass sie nach der Abfrage der Daten oder nach Information über die Daten des aktuellen Aufenthaltsortes die Vergleichseinheit aktiviert.

13. Kommunikationssystem nach einem der vorhergehenden Ansprüche, **dadurch gekennzeichnet, dass** das Kommunikationssystem derart ausgeführt ist, dass die Wiedergabe des Ergebnisses des Vergleiches oder die Durchführung des Vergleiches von dem Tarif des Nutzers des Kommunikationssystems abhängt.

14. Kommunikationssystem nach Anspruch 13, **dadurch gekennzeichnet, dass** der Tarif in dem Speicher, vorzugsweise auf dem Kenndatenmodul gespeichert ist.

15. Kommunikationssystem nach einem der vorhergehenden Ansprüche, **dadurch gekennzeichnet, dass** Mittel vorgesehen sind, die eine mittels der Anzeigemittel erzeugte Anzeige auf dem Personalcomputer (10) oder Laptop (10) entfernen.

16. Kommunikationssystem nach Anspruch 15, **dadurch gekennzeichnet, dass** die Mittel derart ausgeführt sind, dass eine Entfernung der Anzeige bei einer Unterbrechung der Verbindung zwischen Personalcomputer/Laptop (10) und Kommunikationseinheit (20) erfolgt.

17. Kommunikationssystem nach Anspruch 15 oder 16, **dadurch gekennzeichnet, dass** die Mittel derart ausgeführt sind, dass eine Entfernung der Anzeige nach Ablauf einer bestimmten Zeitspanne nach Erzeugung der Anzeige oder auf Aufforderung durch den Nutzer des Personalcomputers (10) oder Laptops (10) erfolgt.

## Claims

1. A communications system having a personal computer (10) with a screen or a laptop with a screen for mobile internet use, having a communications unit (20) which is in communication with the personal computer (10) or laptop (10) and by means of which data can be received wirelessly from a mobile radio network and/or data can be transmitted wirelessly to a mobile radio network, having a memory in which data are stored which define one or more subscriber territories which form part of a total territory covered by the mobile radio network, as well as having a comparison unit which is designed so that it compares data of the current location of the communications unit (20) received by means of the communications unit (20) with the data stored in the memory relating to the subscriber territory or territories, wherein display means in the form of the screen are provided which are in communication with the comparison unit such that the result of the comparison carried out in the comparison unit can be transferred to the display means,
wherein the display means are designed such that the result of the comparison can be reproduced on the personal computer (10) or laptop (10), wherein the subscriber territories are defined in a subscriber-individual manner, and
wherein special services for the use of the personal computer (10) or laptop (10) are realised in the subscriber territories defined in a subscriber-individual manner.

2. A communications system in accordance with claim 1, **characterised in that** a characteristic data module is provided; and **in that** the memory is located on the characteristic data module, with the characteristic data module being a SIM card (30), in particular a UICC card.

3. A communications system in accordance with claim 2, **characterised in that** the characteristic data module is a component of the communications unit (20) or can be inserted into it.

4. A communications system in accordance with one of the preceding claims, **characterised in that** the communications unit (210) is a conventional mobile phone or a modem or PC card communicating with the personal computer (10) or laptop (10).

5. A communications system in accordance with one of the preceding claims, **characterised in that** the communications unit (20) and the personal computer (10) or laptop (10) are in communication with one another by means of a cable connection, a plug connection or wirelessly.

6. A communications system in accordance with claim 5, **characterised in that** the connection between the communications unit and the personal computer (10) or laptop (10) is realised by Bluetooth or WLAN.

7. A communications system in accordance with one of the preceding claims, **characterised in that** the comparison unit is arranged in the personal computer (10) or laptop (10).

8. A communications system in accordance with one of the preceding claims, **characterised in that** a trigger unit is provided which initiates a comparison between data of the current location of the communications unit (20) and data of the memory by means of the comparison unit.

9. A communications system in accordance with claim 8, **characterised in that** the carrier unit is designed such that it initiates the comparison on the start of the personal computer (10) or laptop (10) or on demand by the user of the personal computer (10) or laptop (10).

10. A communications system in accordance with claim 8 or claim 9, **characterised in that** the trigger unit is designed such that it does not initiate the comparison on the change of the location of the communications unit (20), in particular on the change of a radio cell of a mobile radio network.

11. A communications system in accordance with one of the claims 8 to 10, **characterised in that** the trigger unit is designed such that it polls data of the current location of the communications unit (20) from the communications unit (20) after the start of the personal computer (10) or laptop (10) or on demand by the user or is informed of data of the current location by the communications unit (20).

12. A communications system in accordance with claim 11, **characterised in that** the trigger unit is designed such that it activates the comparison unit after the polling of the data or after information on the data of the current location.

13. A communications system in accordance with one of the preceding claims, **characterised in that** the communications system is designed such that the reproduction of the result of the comparison or the carrying out of the comparison depends on the tariff of the user of the communications system.

14. A communications system in accordance with claim 13, **characterised in that** the tariff is stored in the memory, preferably on the characteristic data module.

15. A communications system in accordance with one of the preceding claims, **characterised in that** means are provided which remove a display generated by means of the display means on the personal computer (10) or laptop (10).

16. A communications system in accordance with claim 15, **characterised in that** the means are designed such that a removal of the display takes place on an interruption of the connection between the personal computer (10) or laptop (10) and communications unit (20).

17. A communications system in accordance with claim 15 or claim 16, **characterised in that** the means are designed such that a removal of the display takes place after the end of a specific time period after generation of the display or on demand by the user of the personal computer (10) or laptop (10).

## Revendications

1. Système de communication avec un ordinateur personnel (10) doté d'un écran ou un ordinateur portable doté d'un écran pour l'utilisation mobile d'Internet, avec une unité de communication (20), qui communique avec l'ordinateur personnel (10) ou l'ordinateur portable (10) et à l'aide de laquelle des données sont réceptionnables sans fil à partir d'un réseau de téléphonie mobile et/ou des données sont transmissibles sans fil vers un réseau de téléphonie mobile, avec une mémoire dans laquelle des données sont déposées, qui définissent une ou plusieurs zones d'abonnés constituant une partie d'une zone globale couverte par le réseau de téléphonie mobile, ainsi qu'avec une unité de comparaison, qui est construite de manière à ce que, à l'aide de l'unité de communication (20), elle compare des données reçues du lieu de séjour actuel de l'unité de communication (20) avec les données concernant la ou les zones d'abonnés, qui sont déposées dans la mémoire,
des moyens d'affichage étant prévus sous la forme de l'écran, qui communiquent avec l'unité de comparaison de manière à ce que le résultat de la comparaison effectuée dans l'unité de comparaison soit transmissible aux moyens d'affichage, les moyens d'affichage étant construits de manière à ce que le résultat de la comparaison soit reproductible sur l'ordinateur personnel (10) ou l'ordinateur portable (10),
les zones d'abonnés étant définies individuellement pour les abonnés et
des prestations de service spéciales étant réalisées dans les zones d'abonnés définies individuellement pour les abonnés pour l'utilisation de l'ordinateur personnel (10) ou de l'ordinateur portable (10).

2. Système de communication selon la revendication 1, **caractérisé en ce qu'**un module de données caractéristiques est prévu et **en ce que** la mémoire se trouve sur le module de données caractéristiques, sachant que pour le module de données caractéristiques, il s'agit d'une carte SIM (30), notamment d'une carte UICC.

3. Système de communication selon la revendication 2, **caractérisé en ce que** le module de données caractéristiques est un composant de l'unité de communication (20) ou est insérable dans celle-ci.

4. Système de communication selon une quelconque des revendications précédentes, **caractérisé en ce que** pour l'unité de communication (20), il s'agit d'un téléphone mobile conventionnel ou d'un modem et/ou d'une carte PC communiquant avec l'ordinateur personnel (10) ou l'ordinateur portable (10).

5. Système de communication selon une quelconque des revendications précédentes, **caractérisé en ce que** l'unité de communication (20) et l'ordinateur personnel (10) ou l'ordinateur portable (10) communiquent entre eux à l'aide d'une liaison par câbles, d'une fiche de raccordement ou sans fil.

6. Système de communication selon la revendication 5, **caractérisé en ce que** la communication entre l'unité de communication et l'ordinateur personnel (10) ou l'ordinateur portable (10) est réalisée par Bluetooth ou WLAN.

7. Système de communication selon une quelconque des revendications précédentes, **caractérisé en ce que** l'unité de comparaison est disposée dans l'ordinateur personnel (10) ou l'ordinateur portable (10).

8. Système de communication selon une quelconque des revendications précédentes, **caractérisé en ce qu'**une unité d'amorçage est prévue, qui déclenche une comparaison entre des données du lieu de séjour actuel de l'unité de communication (20) et des données de la mémoire à l'aide de l'unité de comparaison.

9. Système de communication selon la revendication 8, **caractérisé en ce que** l'unité d'amorçage est construite de manière à ce qu'elle déclenche la comparaison au démarrage de l'ordinateur personnel (10) ou de l'ordinateur portable (10) ou sur sollicitation par l'utilisateur de l'ordinateur personnel (10) ou de l'ordinateur portable (10).

10. Système de communication selon la revendication 8 ou 9, **caractérisé en ce que** l'unité d'amorçage est construite de manière à ce qu'elle ne déclenche pas la comparaison au changement du lieu de séjour de l'unité de communication (20), notamment au changement d'une cellule radioélectrique d'un réseau de téléphonie mobile.

11. Système de communication selon une quelconque des revendications 8 à 10, **caractérisé en ce que** l'unité d'amorçage est construite de manière à ce que, après le démarrage de l'ordinateur personnel (10) ou de l'ordinateur portable (10) ou sur sollicitation par l'utilisateur auprès de l'unité de communication (20), elle interroge des données du lieu de séjour actuel de l'unité de communication (20) ou elle est informée par l'unité de communication (20) des données du lieu de séjour actuel.

12. Système de communication selon la revendication 11, **caractérisé en ce que** l'unité d'amorçage est construite de manière à ce que, après l'interrogation des données ou après l'information sur les données du lieu de séjour actuel, elle active l'unité de comparaison.

13. Système de communication selon une quelconque des revendications précédentes, **caractérisé en ce que** le système de communication est construit de manière à ce que la reproduction du résultat de la comparaison ou l'exécution de la comparaison dépende du tarif de l'utilisateur du système de communication.

14. Système de communication selon la revendication 13, **caractérisé en ce que** le tarif est enregistré dans la mémoire, de préférence sur le module de données caractéristiques.

15. Système de communication selon une quelconque des revendications précédentes, **caractérisé en ce que** des moyens sont prévus, qui suppriment un affichage créé à l'aide des moyens d'affichage sur l'ordinateur personnel (10) ou sur l'ordinateur portable (10).

16. Système de communication selon la revendication 15, **caractérisé en ce que** les moyens sont construits de manière à ce qu'une suppression de l'affichage s'effectue lors d'une interruption de la communication entre l'ordinateur personnel/ordinateur portable (10) et l'unité de communication (20).

17. Système de communication selon la revendication 15 ou 16, **caractérisé en ce que** les moyens sont construits de manière à ce qu'une suppression de l'affichage s'effectue après écoulement d'une période définie après la création de l'affichage ou sur sollicitation par l'utilisateur de l'ordinateur personnel (10) ou de l'ordinateur portable (10).
